# EUROPEAN PATENT APPLICATION

(11) **EP 2 399 773 A1**
(43) Date of publication of application: **28.12.2011**
(21) Application number: 11170786.5
(22) Date of filing: 21.06.2011
(51) Int. Cl.: B60Q 1/076, B60Q 1/10, B60Q 1/12

(54) **Vehicle headlamp**

(30) Priority: 24.06.2010 JP 2010143694
(71) Applicant: Koito Manufacturing Co., Ltd., Tokyo 108-8711 (JP)
(72) Inventor: Shibata, Hiroki, Shizuoka-shi, Shizuoka (JP); Oishi, Kazutami, Shizuoka-shi, Shizuoka (JP); Kuroiwa, Yuji, Shizuoka-shi, Shizuoka (JP)
(74) Representative: Intès, Didier Gérard André

(57) **Abstract**

A vehicle headlamp includes: a base frame (13) having a shaft support portion (16) and an actuator mounting portion (14) positioned below the shaft support portion (16) and supported by a lamp housing (2) in a lamp chamber (5); an actuator (21) having an output shaft (22a) rotatable at least around the axis thereof and mounted on the actuator mounting portion (14) of the base frame (13); a movable frame (17) having a unit mounting portion (18); a fulcrum shaft (19a) supported by the shaft support portion (16) of the base frame (13) so as to be rotatable around the axis thereof and tiltable in the up-down direction; and a connection portion (20) positioned below the fulcrum shaft (19a) and connected to the output shaft (22a) of the actuator (21), and turned at least in the horizontal direction by the rotation of the output shaft (22a) of the actuator (21); and a lamp unit (7) having a light source (12) and mounted on the unit mounting portion (18) of the movable frame (17).

## Description

### FIELD

Apparatuses and devices consistent with the present invention relate to a vehicle headlamp. More particularly, the technical field of embodiments of the present invention relate to a vehicle headlamp equipped with a base frame and a movable frame supported by the base frame so as to be turnable at least in the horizontal direction, and a lamp unit being mounted in the movable frame.

### BACKGROUND

Some vehicle headlamps have a structure in which a lamp unit having a light source is disposed inside an outer lamp housing formed of a cover and a lamp body, for example.

Some lamp units for vehicle headlamps can carry out aiming adjustment, that is, the initial adjustment of the irradiation direction of the light emitted therefrom, and leveling adjustment for correcting the inclination of the irradiation direction depending on the weight of the load on a vehicle (for example, refer to JP-A-2004-227933).

In addition, in the vehicle headlamp described in JP-A-2004-227933, the lamp unit thereof can carry out a so-called swivel operation in which the lamp unit is turned in the horizontal direction by the drive force of an actuator so as to follow the traveling direction of a vehicle and so that the direction of the optical axis of the lamp unit is changed.

Vehicle headlamps, each headlamp having a lamp unit, are available in various types. For example, a first type capable of carrying out the aiming adjustment and the leveling adjustment but having no swiveling operation function and a second type vehicle headlamp capable of carrying out the aiming adjustment, the leveling adjustment and the swivel operation.

However, in the case that the first type and second type vehicle headlamps described above are produced, if two types of lamp units being different in shape and structure are produced depending on the type, that is, the first type and the second type, the production costs of the lamp units rise sharply because the lamp units are each formed of numerous components, such as a lens, a lens holder, a reflector.

### SUMMARY

Accordingly, embodiments of the present invention may solve the above-mentioned problem and to provide a vehicle headlamp capable of being produced at low production cost by improving the versatility of the lamp unit thereof.

With the above in mind, a vehicle headlamp includes: a base frame having a shaft support portion and an actuator mounting portion positioned below the shaft support portion and supported by a lamp housing in a lamp chamber; an actuator having an output shaft rotatable at least around the axis thereof and mounted on the actuator mounting portion of the base frame; a movable frame having a unit mounting portion; a fulcrum shaft supported by the shaft support portion of the base frame so as to be rotatable around the axis thereof and tiltable in the up-down direction; and a connection portion positioned below the fulcrum shaft and connected to the output shaft of the actuator, and turned at least in the horizontal direction by the rotation of the output shaft of the actuator; and a lamp unit having a light source and mounted on the unit mounting portion of the movable frame.

Hence, the lamp unit of the vehicle headlamp can be turned around the fulcrum shaft with respect to the base frame in the horizontal direction.

According to a first aspect of the invention, a vehicle headlamp includes: a base frame having a shaft support portion and an actuator mounting portion positioned below the shaft support portion and supported by a lamp housing in a lamp chamber; an actuator having an output shaft rotatable at least around the axis thereof and mounted on the actuator mounting portion of the base frame; a movable frame having a unit mounting portion; a fulcrum shaft supported by the shaft support portion of the base frame so as to be rotatable around the axis thereof and tiltable in the up-down direction; and a connection portion positioned below the fulcrum shaft and connected to the output shaft of the actuator, and turned at least in the horizontal direction by the rotation of the output shaft of the actuator; and a lamp unit having a light source and mounted on the unit mounting portion of the movable frame.

Hence, it might not be necessary to produce lamp units having distinctly different shapes and configurations depending on the type of the vehicle headlamp. Hence, the production cost of the vehicle headlamp can be reduced by the improvement in the versatility of the lamp unit.

According to a second aspect of the invention, the output shaft of the actuator is movable in the front-rear direction.

Hence, it might be possible to carry out so-called leveling adjustment for adjusting the direction of the optical axis of the lamp unit depending on the weight of the load on a vehicle is carried out by tilting the lamp unit in the up-down direction.

According to a third aspect of the invention, a holding member having a holding portion capable of being deformed elastically in nearly the up-down direction is mounted on the base frame, and the fulcrum shaft of the movable frame is pressed from above by the holding portion of the holding member.

Hence, it might be possible to prevent the fulcrum shaft from coming out of the shaft support portion.

According to a fourth aspect of the invention, an engagement portion is provided for the actuator mounting portion of the base frame, and a slide engagement portion to be slid forward and engaged with the engagement portion is provided for the actuator.

Hence, it might be possible to improve the workability of the mounting work of the actuator on the base frame.

According to a fifth aspect of the invention, a support concave portion opening upward is formed in the shaft support portion of the base frame, the fulcrum shaft of the movable frame protrudes downward, the output shaft of the actuator protrudes upward, an insertion concave portion opening downward is formed in the connection portion of the movable frame, and the movable frame is moved downward with respect to the base frame and the actuator, and the fulcrum shaft is inserted into the support concave portion and the output shaft is inserted into the insertion concave portion of the connection portion.

Hence, the movable frame can be connected to the base frame and the actuator by simply moving the movable frame downward. Consequently, the workability of the connection work between the movable frame and the base frame and the actuator may be improved.

### BRIEF DESCRIPTION OF THE DRAWINGS

A general configuration that implements the various features of embodiments of the present invention will be described with reference to the drawings. The drawings and the associated descriptions are provided to illustrate embodiments of the invention and should not limit the scope of the invention.
FIGS. 1 to 6 are views showing an embodiment of a vehicle headlamp according to the present invention;
FIG. 1 is a schematic vertical sectional view showing the vehicle headlamp;
FIG. 2 is an exploded perspective view showing the internal configuration of the vehicle headlamp;
FIG. 3 is a perspective view showing the internal configuration of the vehicle headlamp;
FIG. 4 is a perspective view showing the lower face side of the actuator mounting portion of the base frame of the vehicle headlamp;
FIG. 5 is an enlarged sectional view showing a state in which an actuator is mounted on the base frame; and
FIG. 6 is an enlarged sectional view showing a state in which the protruding portion of a movable frame is held by a holding member.

### DETAILED DESCRIPTION OF THE EMBODIMENTS

Embodiments of a vehicle headlamp according to the present invention will be described below referring to the accompanying drawings.

A vehicle headlamp 1 is installed and provided at each of the left and right end portions in the front end portion of a vehicle body.

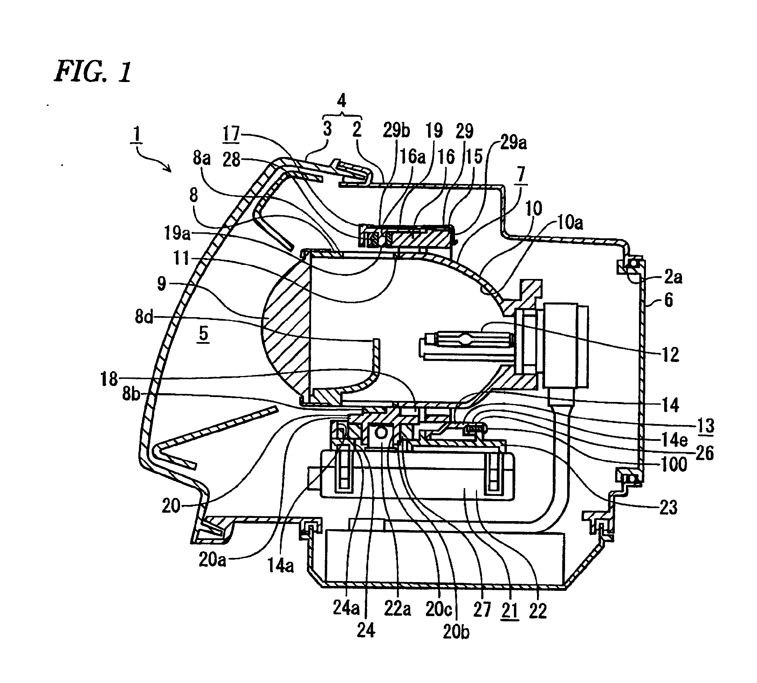

The vehicle headlamp 1 is equipped with a lamp housing 2 having a concave portion opening forward and a cover 3 for closing the opening area of the lamp housing 2 as shown in FIG. 1. The lamp housing 2 and the cover 3 constitute an outer lamp housing 4. The internal space of the outer lamp housing 4 is formed as a lamp chamber 5.

A mounting hole 2a passing through in the front-rear direction is formed at the rear end portion of the lamp housing 2. A back cover 6 is installed in the mounting hole 2a.

A plurality of shaft insertion holes (not shown) separated in the up-down direction and passing through in the front-rear direction are formed at positions adjacent to the rear end of the lamp housing 2.

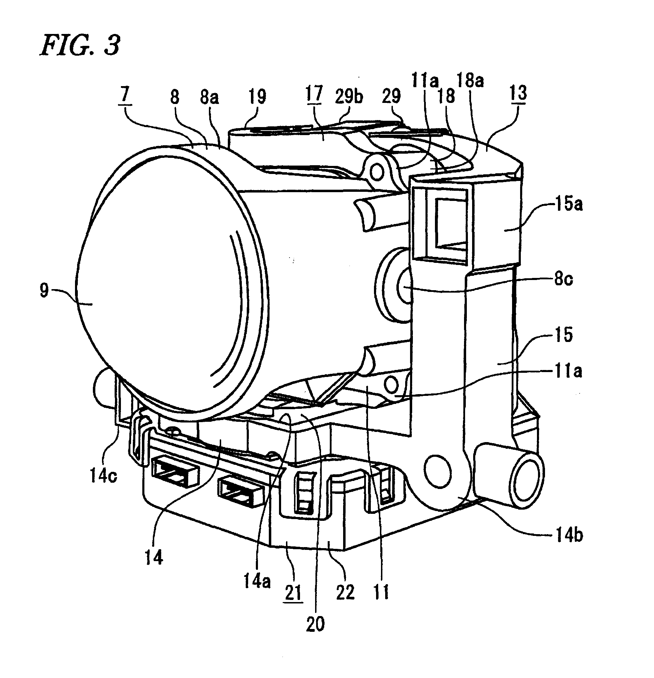

A lamp unit 7 is disposed in the lamp chamber 5 (see FIGS. 1 to 3). The lamp unit 7 has a lens holder 8, a projection lens 9 mounted at the front end portion of the lens holder 8, a reflector 10 positioned behind the lens holder 8, a ring-shaped fastening member 11 mounted on the rear face of the lens holder 8, and a light source 12 mounted at the rear end portion of the reflector 10.

The lens holder 8 has a holding portion 8a formed into a nearly cylindrical shape and passing through in the front-rear direction, a frame connection portion 8b provided at the lower end portion of the holding portion 8a, shaft portions 8c and 8c respectively protruding from the outer face of the holding portion 8a in the left-right direction, and a shade 8d provided inside the holding portion 8a.

The inner face of the reflector 10 is formed as a reflecting surface 10a. The reflector 10 is mounted behind the lens holder 8 with screws or the like while the fastening member 11 is held therebetween.

Fastening protruding portions 11a, 11a, etc. are provided on the fastening member 11 while being separated in the circumferential direction thereof.

Inside the lamp chamber 5, a base frame 13 is supported by the lamp housing 2 so as to be tiltable via an aiming adjustment mechanism (not shown).

The base frame 13 is integrally formed of an actuator mounting portion 14 directed in the up-down direction and a support frame portion 15 having a frame shape and passing through in the front-rear direction. The lower end portion of the support frame portion 15 extends continuously to the outer circumferential portion of the actuator mounting portion 14.

A connection hole 14a is formed in the central portion of the actuator mounting portion 14 in the left-right direction thereof. Aiming support portions 14b and 14c are provided on the actuator mounting portion 14 so as to be separated in the left-right direction.

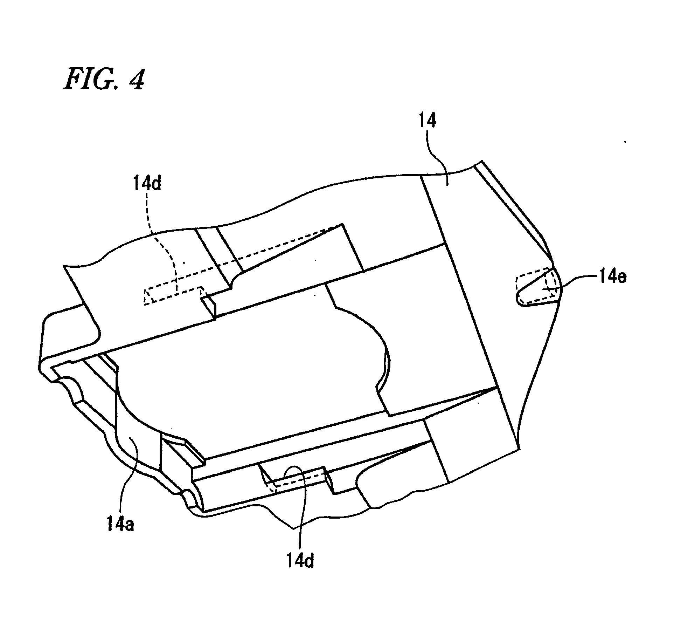

Engagement portions 14d and 14d are respectively formed at the left and right side positions of the connection hole 14a on the lower face side of the actuator mounting portion 14 (see FIG. 4). The engagement portions 14d and 14d are each formed into a groove shape being opened inward and rearward. A screw fastening portion 14e having a screw hole is provided on the lower face side of the actuator mounting portion 14 and behind the connection hole 14a.

A shaft support portion 16 protruding forward is provided at the upper end portion of the support frame portion 15, and a support concave portion 16a is formed at the front end portion of the shaft support portion 16 (see FIGS. 1 to 3). The face for forming the support concave portion 16a is formed into a spherical shape. An aiming support portion 15a is provided on one side of the upper end portion of the support frame portion 15.

A movable frame 17 is supported by the base frame 13. The movable frame 17 is integrally formed of a unit mounting portion 18 formed into a nearly ring shape, a protruding portion 19 protruding forward from the upper end portion of the unit mounting portion 18, and a connection portion 20 provided at the lower end portion of the unit mounting portion 18.

Fastening portions 18a, 18a, etc. are provided for the unit mounting portion 18 so as to be separated in the circumferential direction thereof.

A fulcrum shaft 19a protruding downward is provided at the front end portion of the protruding portion 19.

The connection portion 20 has a flange portion 20a and a connecting protruding portion 20b protruding downward from the flange portion 20a, and the size of the outer shape of the connecting protruding portion 20b is made smaller than that of the flange portion 20a. An insertion concave portion 20c opening downward is formed in the connecting protruding portion 20b. A connection concave portion 20d opening upward is formed at the upper end portion of the connection portion 20.

The fastening protruding portions 11a, 11a, etc. of the fastening member 11 are respectively fastened to the fastening portions 18a, 18a, etc. of the unit mounting portion 18 with screws or the like, whereby the lamp unit 7 is mounted in the movable frame 17. At this time, the frame connection portion 8b provided at the lower end portion of the lamp unit 7 is inserted into the connection concave portion 20d provided in the connection portion 20 of the movable frame 17. Hence, the lamp unit 7 is held in a state of being positioned by the movable frame 17.

An actuator 21 is disposed on the lower face side of the actuator mounting portion 14 of the base frame 13. The actuator 21 is formed of a main body 22 in which a drive mechanism including a motor, gears, etc. is disposed and a connection cover 23 disposed on the upper face side of the main body 22. The main body 22 is made movable with respect to the connection cover 23 in the front-rear direction.

An output shaft 22a protruding upward is provided in the drive mechanism of the main body 22. When the output shaft 22a of the main body 22 is moved in the front-rear direction, the main body 22 is moved with respect to the connection cover 23 in the front-rear direction.

A washer receiving portion 24 is provided at the front end portion of the connection cover 23, and a placement hole 24a passing through in the up-down direction is formed in the washer receiving portion 24. The output shaft 22a is positioned in the placement hole 24a of the washer receiving portion 24.

Slide engagement portions 25 and 25 respectively protruding sideways from the left and right sides of the washer receiving portion 24 are provided for the connection cover 23. A screw fastening protruding portion 26 protruding upward is provided at a position near the rear end of the connection cover 23.

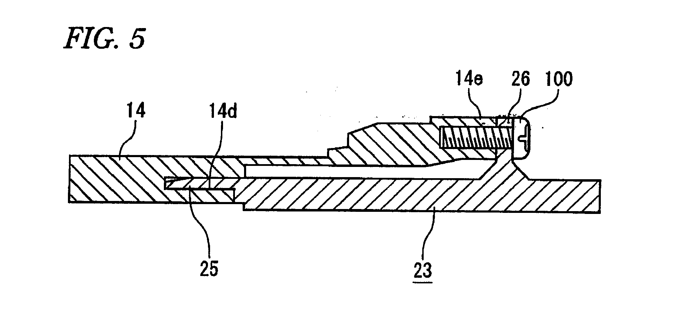

As shown in FIG. 5, the slide engagement portions 25 and 25 are respectively inserted and fitted into the engagement portions 14d and 14d from behind, and the screw fastening protruding portion 26 is fastened in the screw fastening portion 14e with a mounting screw 100, whereby the actuator 21 is mounted on the base frame 13.

In the vehicle headlamp 1, since the slide engagement portions 25 and 25 are respectively inserted into the engagement portions 14d and 14d from behind, the screw fastening protruding portion 26 is fastened in the screw fastening portion 14e with the mounting screw 100, and the actuator 21 is thus mounted on the base frame 13 as described above. With this configuration, the actuator 21 can be removed from the base frame 13 by releasing the fastening of the mounting screw 100 and by moving the connection cover 23 rearward.

Hence, the actuator 21 can be removed easily from the base frame 13. For this reason, it is possible to improve the maintainability of the vehicle headlamp 1 when the actuator 21 becomes faulty and inoperative, for example.

Furthermore, since the actuator 21 can be mounted on the base frame 13 by simply moving the connection cover 23 forward and then by fastening the screw fastening protruding portion 26 in the screw fastening portion 14e with a screw, it is possible to improve the workability of the mounting work of the actuator 21 on the base frame 13.

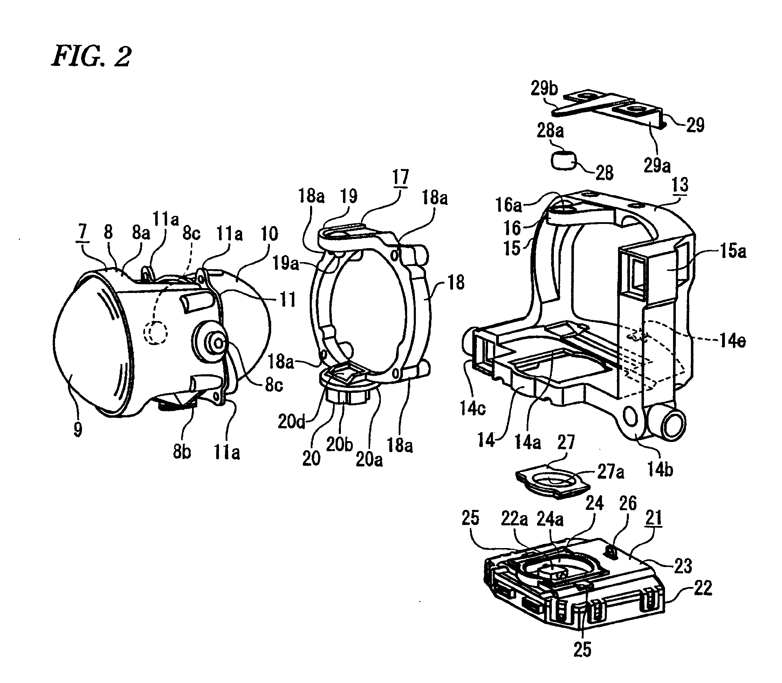

A washer 27 is supported on the washer receiving portion 24 of the actuator 21 so as to be slidable in the front-rear direction (see FIG. 2). An insertion hole 27a passing through in the up-down direction is formed in the washer 27.

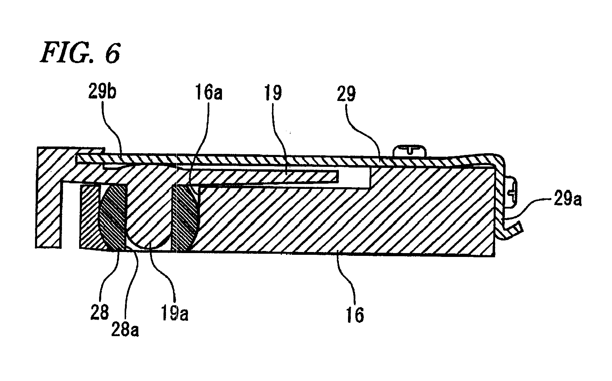

A ball bearing 28 is inserted into the support concave portion 16a formed in the shaft support portion 16 of the base frame 13 (see FIG. 6). The outer circumferential face of the ball bearing 28, not the upper and lower faces thereof, is formed into a spherical face, and the ball bearing 28 is supported so as to be rotatable in any desired direction. A support hole 28a passing through the ball bearing 28 in the up-down direction is formed in the ball bearing 28.

The fulcrum shaft 19a is inserted into the support hole 28a of the ball bearing 28 from above, and the connection portion 20 is inserted into the insertion hole 27a of the washer 27, whereby the movable frame 17 in which the lamp unit 7 is mounted is connected to the output shaft 22a of the actuator 21. Hence, the flange portion 20a of the connection portion 20 of the movable frame 17 is disposed on the washer 27.

A holding member 29 is mounted on the upper end portion of the support frame portion 15 of the base frame 13 with screws or the like. In the holding member 29, the mounting face portion 29a to be mounted on the support frame portion 15 and a holding portion 29b protruding forward from the mounting face portion 29a are integrally formed. The holding portion 29b can be elastically deformed in a direction in which the tip portion thereof is moved with respect to the mounting face portion 29a nearly in the up-down direction.

The protruding portion 19 of the movable frame 17 is pressed from above by the holding portion 29b of the holding member 29, whereby the protruding portion 19 is pressed from above to the shaft support portion 16 of the base frame 13.

Since the protruding portion 19 is pressed by the holding member 29 as described above, the fulcrum shaft 19a can be prevented from coming out of the support hole 28a of the ball bearing 28, and dimensional errors of various components due to processing accuracy can be absorbed. As a result, stable connection states of the various components can be obtained securely.

In the vehicle headlamp 1 configured as described above, when the output shaft 22a of the actuator 21 is rotated around its axis, the movable frame 17 and the lamp unit 7 are integrally turned around the fulcrum shaft 19a in the horizontal direction, whereby a so-called swivel operation is carried out in which the direction of the optical axis of the lamp unit 7 is changed so as to follow the traveling direction of a vehicle. At this time, the movable frame 17 is turned with respect to the washer 27, and the lower face of the flange portion 20a in the connection portion 20 of the movable frame 17 is slid on the upper face of the washer 27.

Furthermore, when the output shaft 22a of the actuator 21 is moved in the front-rear direction, the main body 22 is moved with respect to the connection cover 23 in the front-rear direction, and the movable frame 17 and the lamp unit 7 are integrally tilted around the fulcrum shaft 19a in the up-down direction. As a result, so-called leveling adjustment for adjusting the direction of the optical axis of the lamp unit 7 depending on the weight of the load on a vehicle is carried out. At this time, the washer 27 is slid with respect to the washer receiving portion 24 of the actuator 21 in the front-rear direction.

As described above, since the output shaft 22a is made rotatable in the vehicle headlamp 1, the lamp unit 7 can be turned in the horizontal direction and can thus be swiveled. Moreover, since the output shaft 22a is made movable in the front-rear direction, the lamp unit 7 can be tilted in the up-down direction, whereby the leveling adjustment can be carried out.

A pivot shaft (not shown) is rotatably connected to the aiming support portion 14b of the base frame 13. A first operation shaft (not shown) passing through a shaft insertion hole of the lamp housing 2 is rotatably connected to the aiming support portion 14c of the base frame 13. A second operation shaft (not shown) passing through another shaft insertion hole of the lamp housing 2 is rotatably connected to the aiming support portion 15a of the base frame 13.

An aiming adjustment mechanism is formed of the pivot shaft, the first operation shaft and the second operation shaft.

When the first operation shaft is rotated, the base frame 13, the movable frame 17 and the lamp unit 7 are integrally tilted around the axis connecting the aiming support portion 14b and the aiming support portion 15a with respect to the lamp housing 2. As a result, so-called left-right aiming adjustment, i.e., optical axis adjustment in the left-right direction, is carried out.

Furthermore, when the second operation shaft is rotated, the base frame 13, the movable frame 17 and the lamp unit 7 are integrally tilted around the axis connecting the aiming support portion 14b and the aiming support portion 14c with respect to the lamp housing 2. As a result, so-called up-down aiming adjustment, i . e. , optical axis adjustment in the up-down direction, is carried out.

The shaft portions 8c and 8c protruding sideways are provided on the lens holder 8 of the lamp unit 7 and can be used as turning fulcrums for leveling adjustment. In the case that the shaft portions 8c and 8c are used as the turning fulcrums in the leveling adjustment, the lamp unit 7 is used for a vehicle headlamp that does not require the swivel operation and can carry out the aiming adjustment and the leveling adjustment.

When the lamp unit 7 is used for this kind of vehicle headlamp, a base frame capable of supporting the lamp unit 7 so that the lamp unit 7 is turnable around the shaft portions 8c and 8c should only be formed.

The lamp unit 7 can also be used for a vehicle headlamp having no leveling adjustment function and no swiveling operation function but having only an aiming adjustment function.

As described above, the lamp unit 7 can be commonly used for a first type vehicle headlamp capable of carrying out the aiming adjustment and the leveling adjustment but having no swiveling operation function and a second type vehicle headlamp capable of carrying out the aiming adjustment, the leveling adjustment and the swivel operation.

Hence, it is not necessary to produce lamp units having distinctly different shapes and configurations depending on the type of the vehicle headlamp. Hence, the production cost of the vehicle headlamp can be reduced by the improvement in the versatility of the lamp unit 7.

In the case that the lamp unit 7 is used regardless of the type of the vehicle headlamp, it is necessary to produce a base frame and a movable frame having different shapes depending on the type of the vehicle headlamp. However, since the base frame and the movable frame are each a component of the vehicle headlamp, the production cost of a vehicle headlamp in the case that the base frame and the movable frame having different shapes are produced can be made lower than the production cost of a vehicle headlamp in the case that a lamp unit formed by assembling a plurality of components is produced depending on the type of the vehicle headlamp.

Moreover, in the vehicle headlamp 1, the movable frame 17 is moved downward with respect to the base frame 13 and the actuator 21, and the fulcrum shaft 19a is inserted into the support concave portion 16a of the shaft support portion 16 and the output shaft 22a is inserted into the insertion concave portion 20c of the connection portion 20. As a result, the movable frame 17 is connected to the base frame 13 and the actuator 21.

Hence, the movable frame 17 can be connected to the base frame 13 and the actuator 21 by simply moving the movable frame 17 downward. Consequently, the workability of the connection work between the movable frame 17 and the base frame 13 and the actuator 21 can be improved.

The shapes and structures of the respective components described in the best modes for carrying out the above-mentioned present invention are only some examples for embodying the present invention, and these are not construed as limiting the technical range of the present invention.

## Claims

1. A vehicle headlamp **characterized in that** it comprises:
a base frame (13) having a shaft support portion (16) and an actuator mounting portion (14) positioned below the shaft support portion (16) and supported by a lamp housing (2) in a lamp chamber (5);
an actuator (21) having an output shaft (22a) rotatable at least around the axis thereof and mounted on the actuator mounting portion (14) of the base frame (13);
a movable frame (17) having
a unit mounting portion (18);
a fulcrum shaft (19a) supported by the shaft support portion (16) of the base frame (13) so as to be rotatable around the axis thereof and tiltable in the up-down direction; and
a connection portion (20) positioned below the fulcrum shaft (19a) and connected to the output shaft (22a) of the actuator (21), and turned at least in the horizontal direction by the rotation of the output shaft (22a) of the actuator (21); and
a lamp unit (7) having a light source (12) and mounted on the unit mounting portion (18) of the movable frame (17).

2. The vehicle headlamp according to claim 1, wherein
the output shaft (22a) of the actuator (21) is movable in the front-rear direction.

3. The vehicle headlamp according to claim 1 or 2, wherein
a holding member (29) having a holding portion (29b) capable of being deformed elastically in nearly the up-down direction is mounted on the base frame (13), and
the fulcrum shaft (19a) of the movable frame (17) is pressed from above by the holding portion (29b) of the holding member (29).

4. The vehicle headlamp according to claim 1, 2 or 3, wherein
an engagement portion (14d) is provided for the actuator mounting portion (14) of the base frame (13), and
a slide engagement portion (25) to be slid forward and engaged with the engagement portion (14d) is provided for the actuator (21).

5. The vehicle headlamp according to claim 1, 2, 3 or 4, wherein
a support concave portion (16a) opening upward is formed in the shaft support portion (16) of the base frame (13),
the fulcrum shaft (19a) of the movable frame (17) protrudes downward,
the output shaft (22a) of the actuator (21) protrudes upward,
an insertion concave portion (20c) opening downward is formed in the connection portion (20) of the movable frame (17), and
the movable frame (17) is moved downward with respect to the base frame (13) and the actuator (21), and the fulcrum shaft (19a) is inserted into the support concave portion (16a) and the output shaft (22a) is inserted into the insertion concave portion (20c) of the connection portion (20).
